# EUROPEAN PATENT SPECIFICATION

(11) **EP 2 994 517 B1**
(45) Date of publication and mention of the grant of the patent: **29.03.2023**
(21) Application number: 14718131.7
(22) Date of filing: 17.04.2014
(51) Int. Cl.: C09K 8/58, E21B 41/00, B65G 5/00, C09K 8/594, E21B 43/16

(54) **METHOD FOR CO2 EOR**
VERFAHREN FÜR VERSTÄRKTE ÖLGEWINNUNG MITHILFE VON CO2
PROCÉDÉ POUR LA RÉCUPÉRATION ASSISTÉE DE PÉTROLE À L'AIDE DE CO2

(30) Priority: 17.04.2013 WO PCT/EP2013/058033
(43) Date of publication of application: 16.03.2016
(73) Proprietor: Equinor Energy AS, 4035 Stavanger (NO)
(72) Inventor: NAZARIAN, Bamshad, N-7053 Ranheim (NO); RINGROSE, Philip Sefton, N-7059 Trondheim (NO)
(74) Representative: Dehns
(86) International application number: PCT/EP2014/057978
(87) International publication number: WO 2014/170466

(56) References cited:
- WO-A2-2012/041926
- US-A1- 2007 187 151
- US-A1- 2008 066 918
- US-A1- 2009 056 941

## Description

The present invention relates to a method of Enhanced Oil Recovery (EOR), and more particularly to a method of Enhanced Oil Recovery from paleo or residual oil zones in a subterranean geological formation. The present invention may also result in improved and/or optimized CO₂ storage. Injection of CO₂ is a well-known method to enhance recovery of oil from a formation. CO₂ Enhanced Oil Recovery (EOR) is a secondary or tertiary recovery method for oil production. CO₂ injection can be done after water injection or earlier in field development. Since the 1970s, CO₂ flooding has been one of the most successful gas injection techniques in the United States, but it is also used worldwide. CO₂ EOR has been applied in oil recovery from a variety of oil reservoirs in both sandstone and carbonate rocks.

The recovery mechanisms identified in CO₂ flooding are grouped into miscible and immiscible displacement. In immiscible displacement oil swelling and oil viscosity reduction have been identified as the main processes which enhance oil recovery. Vaporization of intermediate and heavy hydrocarbons and developed multi-contact miscibility are the main miscible displacement processes in CO₂ flooding to enhance oil recovery.

Further, CO₂ EOR has been considered for extracting oil from residual oil zones in which oil remains as immobile residual saturation below the water-oil-contact.

However it has been found that CO₂ enhanced oil recovery (EOR) can have the following problems: i) gravity segregation of CO₂ phase in a formation/reservoir resulting in bypassed oil zones- this is where the CO₂ segregates in the reservoir, for example to the upper part of the formation/reservoir, so that some of the oil zones are not affected by the injected CO₂; and ii) water shielding- this is where in-place oil is shielded by mobile water preventing CO₂ from contacting the oil. It is thought that CO₂ Enhanced Oil Recovery in residual oil zones in a formation will be restrained by the problems mentioned above, especially water shielding, since reservoir rock in residual oil zones is expected to be water-wet.

The estimated recoverable volume of paleo or residual oil zones from a number of onshore reservoirs is considerable: for example, in the United States this amounts to around 10×10⁹ m³ at standard temperature and pressure (giga standard cubic metre). Paleo and residual oil zones are also found in offshore oilfields, such as in the Norwegian Continental Shelf as reported by the Norwegian Petroleum Directorate.

Further, CO₂ EOR in residual oil zones can also be an effective method to store considerable amounts of CO₂ underground, making this process a climate change mitigating measure.

The Sleipner carbon capture and storage (CCS) Project operated by Statoil, which is located 250 km off the Norwegian coast, is an example of the commercial storage of CO_{2.}. The CO₂ is stored in supercritical state in the Utsira formation at a depth of 800-1000m below the sea surface. The CO₂ produced during natural gas processing is captured and subsequently injected underground. CO₂ injection started in October 1996 and by 2012, more than 13 million tons of CO₂ had been injected at a rate of approximately 2700 tons per day. A shallow long-reach well is used to take the CO₂2.4 km away from the producing wells and platform area. The injection site is located beneath a local dome of the top Utsira formation.

Another known project is the In Salah CCS Project which is an onshore project for the production of natural gas located in the Algerian Central Sahara. The Krechba Field produces natural gas containing up to 10% of CO₂ from a number of geological reservoirs. CO₂ has been stripped from the gas and re-injected into a sandstone reservoir at a depth of 1800m enabling the storage of up to 1 Mt of CO₂ per year.

While the global capacity to store CO₂ deep underground is believed to be large, the development of a new storage site is inevitably costly as it requires an assessment of potential risk to humans and the eco system. It is thus desirable that existing sites are exploited to maximum capacity. Current estimates suggest that the existing methods used to inject supercritical CO₂ into deep storage sites result in only around 2% of the pore volume of the geological storage site being utilized for CO₂ sequestration. This is believed to be due to the uneven sweep of the injected CO₂ in subterranean formations, which leads to a phenomenon called "fingering". "Fingering" is an effect in which the CO₂ injection front is highly uneven with small areas of high penetration surrounded by areas in which the CO₂ has not penetrated at all. Pursuing current practices will result in the loss of considerable storage volume in available storage sites.

In order to solve the above mentioned problems with CO₂ storage, a technique is described in WO 2012/041926 which is known as Composition Swing Injection (CSI). In the technique described in this document, a CO₂ composition injected into a subterranean geological formation is changed by addition of hydrocarbons, specifically light alkanes, in cycles between a gas-like and a liquid-like state. This cycling between injecting different compositions has the effect that the CO₂ plume is stabilised during the injection period so that the CO₂ storage capacity can be increased.

US 2008/066918 A1 discloses methods and compositions to enhance oil and gas recovery from subterranean reservoirs.

US 2009/056941 A1 discloses injecting an enhanced oil recovery formation into a first well to produce oil from a second well.

US 2007/187151 A1 discloses a system and method of injecting a combined liquid CO₂ and aqueous or hydrocarbon-based stream into a subterranean formation.

WO 2012/041926 A2 discloses a method and arrangement for storing a CO₂ composition in a subterranean formation.

The present invention provides a method of Enhanced Oil Recovery (EOR) from paleo or residual oil zones in a subterranean geological formation, the method comprising: a first injecting step of injecting a first composition comprising CO₂, the first composition being injected at its supercritical state, into the subterranean geological formation; a second injecting step of injecting a second composition comprising CO₂ and a hydrocarbon, the second composition being injected at its supercritical state, into the subterranean geological formation, wherein the first composition and the second composition are different and wherein the different injected compositions have different viscosities and densities; and extracting oil from the subterranean geological formation. The method further comprises cycling alternately between the first injecting step and the second injecting step, i.e. the first injecting step is performed for a period of time followed by the second injecting step for a period of time, again followed by the first injecting step for a period of time, and so forth.

The purposeful enrichment of the CO₂ composition with hydrocarbons, preferably intermediate hydrocarbons, alters the viscosity and density of the CO₂ composition at the site of injection. The hydrocarbons can be selected to make the CO₂ composition miscible with the residual oil. This may, therefore, enhance the extraction of the residual oil.

It has been found that injecting a first composition for a period of time followed by a second composition for a period of time can be used to improve the process of Enhanced Oil Recovery. This is because the different injected compositions have different properties, including density and viscosity. By controlling
properties such as density and viscosity of the second composition in this manner, the area of the subterranean geological formation which is swept by the injected compositions which contain CO₂ can be increased. As a result, the amount of oil which is recovered from the subterranean geological formation may be increased.

It has also been found that this method may optimise CO₂ storage. This is because a larger area is swept by the injected composition so more CO₂ storage sites are encompassed and/or because the CO₂ plume is stabilised during the injection period.

A "subterranean geological formation" is an underground formation, which may be referred to as a reservoir, where oil can be found. The formation may be onshore or offshore.

The oil zones of the subterranean geological formation are paleo or residual oil zones.

The hydrocarbon which is in the second composition may be selected to make the second composition miscible with residual oil in the subterranean geological formation. This may be achieved because the selected hydrocarbon(s) modify the properties of the injected CO₂ containing composition such that it becomes miscible with the oil to be extracted.

The selection of hydrocarbon(s) to cause the second composition to be miscible with the residual oil depends on a number of factors, such as the precise composition of the oil, the conditions, such as temperature and pressure, in the subterranean geological formation and the temperature and pressure of the injected compositions.

Selecting appropriate hydrocarbon(s) to make the second composition miscible with residual oil will further enhance oil extraction as the oil combined with second composition will be easier to extract. This is because the viscosity of the oil may be reduced so that it can flow to a production well.

The hydrocarbon in the second composition may comprise a light, intermediate, and/or heavy hydrocarbon(s). Light hydrocarbons are hydrocarbons with a number of carbon atoms in the range C1 to C4 (typical molecular weight (MW) of less than 72g/mol), intermediate hydrocarbons are hydrocarbons with a number of carbon atoms in the range C5 to C10 (typical molecular weight (MW) of 72-142g/mol) and heavy hydrocarbons are hydrocarbons with more than 10 carbon atoms (i.e. greater than C10 and a typical MW greater than 142g/mol). As an example, the light hydrocarbons may comprise propane, iso-butane and/or butane, and the intermediate hydrocarbons may comprise pentane, hexane, and/or heptane.

The hydrocarbon(s) in the second composition may consist of light hydrocarbon(s), intermediate hydrocarbon(s) and/or heavy hydrocarbon(s).

The hydrocarbon(s) may be saturated hydrocarbon(s), e.g. alkanes. The hydrocarbon(s) may be either straight chain or branched chain hydrocarbon(s).

Further, the second composition may comprise more than one type of hydrocarbon. For example, the compositions may comprise a plurality of different hydrocarbons. Thus, the second composition may consist of CO₂ and one or more hydrocarbon(s) (which are preferably intermediate hydrocarbons). Additionally and/or alternatively, the second composition may comprise light hydrocarbons, i.e. hydrocarbons with C1 to C4 (MW typically less than 72g/mol), preferably hydrocarbon(s) with a number of carbon atoms in the range C2 to C4 and a molecular weight of 30 to 85g/mol, which may be in addition to intermediate and/or heavy hydrocarbon(s).

As discussed above, the technique of composition swing injection is previously known in the context of CO₂ storage, though, only light alkanes are used in the injected composition. This is because the injected composition is retained underground. As a result, heavier hydrocarbons (i.e. C5 or greater), which are more valuable, are not used because the hydrocarbons would also be trapped underground which means that CO₂ storage using heavier hydrocarbons is not viable.

However, in the present case, it has surprisingly been realised that varying the composition of the injected fluid can be used to enhance oil recovery. In this context it is possible to extract more oil and/or re-extract the injected composition and thus it is viable to use more valuable components such as intermediate and heavy hydrocarbons in the injected fluids.

The inventors has recognised that because it is viable to use heavier and more valuable hydrocarbons in the injected composition for the purpose of EOR, it is possible to select the hydrocarbons and their proportion (e.g. ratio of hydrocarbons to CO₂) in the second composition without such severe restraints due to the value of these hydrocarbons. As a result, appropriate hydrocarbons (which may be light, intermediate and/or heavy hydrocarbons) and/or proportion of hydrocarbon(s) can be selected to make the second CO₂ containing composition miscible with the oil.

This aids the extraction of the oil and also means that it is possible to recover the hydrocarbons in the second composition, which are mixed with the oil, from the extracted oil.

Thus, the method may comprise extracting oil and at least some, although preferably most, i.e. greater than 50%, 70%, 80% or 90%, of the injected second composition.

The precise amounts of CO₂ and/or hydrocarbon which are desirable/optimal will depend on a number of factors such as the hydrocarbons used, the oil composition and the subterranean geological formation conditions. However, preferably, the hydrocarbon content in the second composition is in the range of 1 mol% hydrocarbon to 50 mol% hydrocarbon, preferably 3 mol% hydrocarbon to 40 mol% hydrocarbon, preferably 5 to 15mol% and most preferably 10 mol% hydrocarbon (where the mol% is relative to the composition as a whole). Preferably, the second composition comprises at least 80 mol% CO₂, more preferably at least 90 mol% CO₂.

The first composition may be essentially pure CO₂. For example, it may consist of CO₂ with unavoidable impurities, i.e. it may be substantially 100 mol% CO₂ (or greater than 99.9 mol% CO₂). Alternatively, the first composition may comprise other components in addition to the CO₂. For example, it may comprise light, intermediate and/or heavy hydrocarbons. However, as noted above, it is required that the composition of the first composition is different from the composition of the second composition. This is so that the injected compositions have different properties at a given temperature and pressure. For example, the first composition may comprise greater than 95 mol% CO₂ or greater than 98 mol% CO₂.

As an example, the first composition may be pure CO₂ with unavoidable impurities and the second composition may have the composition shown in the below table.

| Component | Mole fraction |
|---|---|
| CO2 | 0.92 |
| Methane | 0.0001 |
| Ethane | 0 |
| Propane | 0.002 |
| i-Butane | 0 |
| n-Butane | 0 |
| i-Pentane | 1.0E-05 |
| n-Pentane | 1.0E-05 |
| n-Hexane | 0.02 |
| n-Heptane | 0.06 |

The first composition and the second composition may come from two separate sources which provide different CO₂ containing compositions. For example, they may come from different CO₂ capture processes, gas processing facilities or subterranean sources which provide different CO₂ compositions.

Alternatively, there may be a single source of CO₂-containing composition (which may be pure CO₂ with unavoidable impurities) with which additional components, such as intermediate and/or heavy hydrocarbons, are mixed to provide the second composition. The source of CO₂ containing composition may provide the first composition or the source of CO₂ containing composition may be mixed with additional additives, mainly hydrocarbons, to provide the first composition or the source may be purified to provide the first composition.

In a given cycle, the duration of a time period of the injection of the first composition may be the same as a time period of the injection of the second composition. Alternatively, the time periods may be different, e.g. the time period of the injection of the second composition may be longer than the time period of the injection of the first composition or vice versa. Also, the time period of injection of the first and second compositions may vary between cycles.

Preferably the time periods are each longer than a month, i.e. the time a composition is injected before it is changed is preferably longer than a month. The time periods may each be between one month and one year, or between three and six months. For example, the injection of the first composition may be performed for three months followed by injection of the second composition for six months, again followed by the injection of the first composition for three months.

The method may further comprise a third injecting step of injecting a third composition comprising CO₂ into the subterranean geological formation for a third period of time, wherein the third composition is different from the first and the second compositions. This third injecting step may be performed alternately with the first and second injecting steps in a repeating cycle. There may also be one or more sill further injecting steps which are also performed alternately with the first and second injecting steps in a repeating cycle.

The first composition and the second composition are injected at their supercritical state. The compositions are compressed to assume a supercritical state at the site of injection.

Close to the critical point, small changes in composition can result in large changes in properties. Thus, although the composition of the first and second compositions may be relatively similar, the properties of the two fluids may be very different when they are at their supercritical state. This can aid oil extraction as the two distinct phases can have very different properties and thus sweep a larger area of the subterranean formation (e.g. due to decreased segregation).

A supercritical fluid exists in a phase between liquid and gas. It cannot actually become a liquid or a gas, yet it can demonstrate more gas-like or more liquid-like properties i.e. occupy a different supercritical "phase" by virtue of its viscosity and density. The different phases may be called gas-like or liquid-like phases.

The composition can be altered to have a higher or lower critical temperature and pressure by the addition of a defined concentration of one or more hydrocarbons. This shift in the critical properties means that at the same injection temperature and pressure, the hydrocarbon enriched composition will have a different viscosity/density to that of the non hydrocarbon-enriched composition.

In addition to the composition of the injected composition being changed between the first and the second injection step, the temperature and/or pressure of the injected compositions may also be different. This means that the properties, e.g. density and viscosity, may further be tailored between the two injection steps.

Alternatively, the pressure and temperature of the injected compositions may be relatively constant.

Herein disclosed is a method for Enhanced Oil Recovery and optimized CO₂ storage in residual oil zones, in which a CO₂ containing composition is mixed with a hydrocarbon containing fluid into a combined composition, the said combined composition is injected into an injection well and further into a formation.

The method may comprise recirculating at least CO₂ and/or hydrocarbons from the formation, in addition to extracting oil. In other words, the step of extracting may also comprise extracting one or more of at least some of the injected CO₂ and hydrocarbons. In this case, the injected CO₂ and hydrocarbons may be separated from the extracted oil and used to form on the compositions which are injected.

The extracted and/or recirculated components from the formation may be conveyed to a separation unit.

Preferably at least one of the extracted CO₂ and hydrocarbons are separated by the separation unit and conveyed from the separation unit to the injection well.

In the present invention residual oil may be separated by a separation unit.

In preferred embodiments of the present invention, the combined composition (i.e. first or second composition) comprises gas-like or liquid-like behaviour at supercritical conditions by cycling between at least two sets of injection parameters. The injection parameters may be the composition, temperature and/or pressure of the injected composition.

The present invention comprises use of the method described for enhancing oil recovery.

Further in one embodiment of the said invention comprises use of a method as mentioned above for improving and/or optimizing CO₂ storage.

Herein disclosed is an apparatus or installation for Enhanced Oil Recovery from oil zones in a subterranean geological formation, the apparatus or installation comprising an injection well leading into the subterranean geological formation for injecting compositions into the formation, a supply of CO₂, a supply of a hydrocarbon, a means for controlling the composition injected via the injection well such that the composition can be cyclically alternated between a first composition comprising CO₂ and a second composition comprising CO₂ and the hydrocarbon, and a production well for extracting oil from the subterranean geological formation.

The supply of CO₂ may supply substantially pure CO₂ or it may supply CO₂ with other additions such as hydrocarbon(s). The supply of a hydrocarbon may supply one or more hydrocarbons which may be supplied with CO₂. The supply of CO₂ may provide the first composition and/or the supply of a hydrocarbon (which may be mixed with other additions such as CO₂) may provide the second composition. Alternatively or additionally, the supply of CO₂ may be mixed with the supply of a hydrocarbon to provide the second composition.

The supply of CO₂ and/or the supply of a hydrocarbon may be in the form of man-made supplies such as tanks. The supply of CO₂ and/or the supply of a hydrocarbon may be from a natural source such as an underground reservoir.

A separation unit may be arranged to receive the fluid extracted from the production well. In use, oil and possibly one or more of the components of the first and/or second composition may be extracted via the production well. The separation unit may be arranged to separate components of the first and/or second compositions from the extracted oil. The separated components (e.g. CO₂ and hydrocarbons) may be fed back to the injection well where they may be used to form the first and/or second compositions.

It will be appreciated that in preferred embodiments of the present invention, Composition Swing Injection (CSI) technique is applied as a modified CO₂ EOR method for oil production from paleo and residual oil zones combined with optimized CO₂ storage. The methods used to achieve the liquid-like behaviour is to add intermediate and/or heavy hydrocarbons to the CO₂ containing composition to modify density and viscosity of the injected stream.

Using composition swing injection in which one of the injection cycles comprises injecting a composition containing CO₂ and a hydrocarbon for Enhanced Oil Recovery may have the following advantages compared to known CO₂ EOR:
- miscibility with the residual oil at in situ conditions resulting in considerable reduction in residual oil saturation and increased volume of recoverable oil;
- stable and compact CO₂ plume that increases the sweep efficiency and consequently results in higher recovery factors from the residual oil zone;
- considerable amount of CO₂ can be permanently stored in paleo and residual oil reservoirs due to CO₂ occupying the pore space previously occupied by oil in a process where CO₂ gravity override is significantly reduced and high sweep efficiency is achieved.

The injection cycle of composition with gas-like and then liquid-like behaviour can vary (depending on the reservoir and the oil to be extracted) but an example injection cycle may comprise two months of liquid-like injection, where intermediate and/or heavy hydrocarbon containing composition is added, followed by one month of gas-like injection wherein an intermediate and/or heavy hydrocarbon containing composition is not added. The cost of added hydrocarbon containing composition is offset against the added effectiveness of oil recovery and CO₂ storage using this technique and/or the possibly of extracting at least some of the added hydrocarbons from the extracted oil.

In preferred embodiments of the present invention, the method comprises recycling CO₂ produced with the oil extracted from a production well. In one embodiment of the present invention when CSI is applied to EOR in residual oil zones, the produced CO₂ may be recycled, but in addition some components of the produced oil may also be recycled. In one embodiment of the present invention CO₂ can also be captured from the oil or gas used in energy combustion, and optionally re-injected, leading to the possibility of near-zero CO₂ emissions for the total system.

In preferred embodiments of the present invention, less segregation tendency is achieved by applying Composition Swing Injection (CSI) technique resulting in a more viscous CO₂ composition. Injection of CO₂ water-alternating-gas (WAG) is not necessarily required since gravity override is considerably reduced in Composition Swing Injection. Consequently, the problems associated with water shielding may be resolved.

In preferred embodiments of the present invention, combined CO₂ storage and enhanced oil recovery can be achieved. The extra income from enhanced oil production can cover part of the costs associated with CO₂ Capture and Storage making this process a very attractive CO₂ Capture Utilization and Storage (CCUS) method. Composition Swing Injection may be implemented using available CO₂₋rich gas streams and hydrocarbon liquid and gas streams in order to achieve enhanced CO₂ storage and CO₂ EOR.

An embodiment of the invention will now be described by way of example only with reference to the attached figure. It should be understood that the drawing is not necessarily drawn to scale and that it is merely intended to schematically illustrate the structures and procedures described herein.

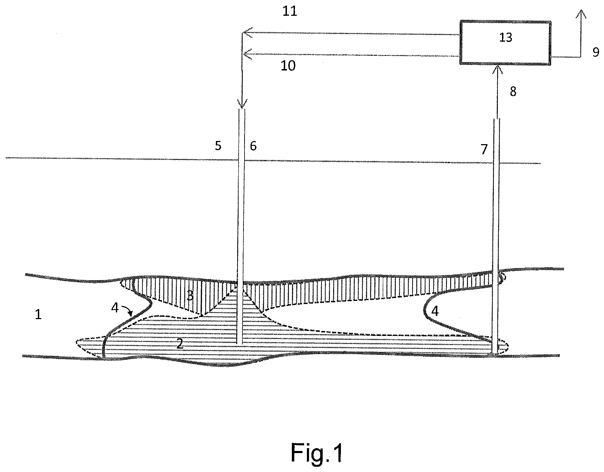

Figure 1 shows an apparatus for the injection of a CO₂ containing composition into a geological formation and a schematic representation of an injection front formed according to the present invention.

The apparatus comprises an injection well 5 which comprises a conduit 6 for injecting CO₂ comprising compositions into a geological formation 1. It further comprises a production well 7 for the extraction and/or recirculation of at least one of residual oil, CO₂ and hydrocarbon from the formation 1.

The fluid extracted via the production well 7 is directed to a separation unit 13. At the separation unit 13 the extracted fluid is separated into oil and/or gas, which is directed via pipe 9 to be used or further transported, and CO₂ and hydrocarbons , which are directed via pipes 10 and 11 to be re-injected into the geological formation 1 via the injection well 5. The apparatus may be used for a method of Enhanced Oil Recovery from oil zones in the subterranean geological formation 1. The method comprises cyclically alternating between injecting a first composition of substantially pure CO₂ at its supercritical point into the subterranean geological formation 1 for a period of time via the injection well 5 and injecting a second composition comprising CO₂ and a hydrocarbon (preferably an intermediate and/or heavy hydrocarbon) at its supercritical point into the subterranean geological formation 1 for a subsequent period of time via the injection well 5. The method also comprises extracting oil from the subterranean geological formation 1 via the production well 7.

In other words, the characteristics of injection parameters are cycled between at least two sets of injection parameters prior to injection of said composition, resulting in, among other properties, the density and viscosity of said composition being varied during injection. Specifically, injecting a first composition comprising CO₂ for a period of time is alternatingly cycled with injecting a second composition comprising CO₂ and a hydrocarbon (preferably an intermediate and/or heavy hydrocarbon). The first composition comprising CO₂ or the second composition comprising CO₂ mixed with a hydrocarbon containing fluid is injected via the injection well 5 and a conduit 6 into a geological formation 1. The geological formation 1 can also be understood to be a storage reservoir.

When the injection parameters are changed (e.g. the composition is changed by the addition of hydrocarbons) to give a higher viscosity and higher density said composition behaves more like a liquid. During injection of the liquid-like composition, the injected stream tends to occupy the lower areas 2 of the geological storage formation 1. The gas-like composition tends to occupy the upper areas 3 of the geological storage formation 1. The stabilized Compositional Swing Injection (CSI) front 4 is more uniform, and the storage capacity of the geological formation 1 may therefore be increased. Further the present invention may enhance oil recovery and increase sweep efficiency due to the different viscosities and densities of the injected compositions. Further at least one of the components (CO₂ and hydrocarbons) are recirculated from the formation via a production well 7.

The injection of the first or the second composition may also be used to assess the geology of the subterranean formation. This is because the time to breakthrough, i.e. the time for the injected composition to reach a production well, for each phase (i.e. composition) can be observed in the production well. Further a wellhead or down-hole monitoring of CO₂ and hydrocarbons can be used in order to among others monitor and characterise the CSI front/profile/ the stabilized CSI front 4. Measuring the injection parameters such as injection temperature, injection pressure, hydrocarbon concentration, and concentration of CO₂ will ensure the accuracy of injection operation so that it results in a stabilized CSI front.

The fluid extracted from the formation is conveyed via a pipe 8 to a separation unit 13 in which gas and/or oil may be separated off and conveyed via a pipe 9

Further separated/recirculated CO₂ may be conveyed from the separation unit 13 via a pipe 11 to the injection well 5 to be injected as part of the first and/or second composition. Furthermore, hydrocarbons recirculated from the formation and separated off in the separator 13 may be conveyed to the injection well 5 via a pipe 10 and injected into the formation as part of the first and/or second composition.

These and other examples of the invention illustrated above are provided by way of example only and the actual scope of the invention is to be determined from the following claims.

### Terminology

"Enhanced oil recovery" within the context of the present invention, shall be understood as a method in order to enhance recovery of oil from a formation.

"Optimized storage" herein shall be understood as improving or maximizing storage of CO₂ by controlling CO₂ movement inside the reservoir through modification of the flow properties of the CO₂ composition.

"Supercritical conditions" within the context of the present invention, shall be understood as the condition in which a fluid is at a temperature or pressure at or above its critical point, where distinct liquid and gas phases do not exist.

A supercritical fluid exists in a phase between liquid and gas. It cannot actually become a liquid or a gas, yet it can demonstrate more gas-like or more liquid-like properties i.e. occupy a different supercritical "phase" by virtue of its viscosity and density. The different phases may be called gas-like or liquid-like phases.

Close to the critical point, small changes in composition, pressure or temperature can result in large changes in phase properties, allowing the design of many phase properties of a supercritical fluid. Thus, it is preferable for the injected compositions to be at or near their critical points so that relatively large change in the properties can be achieved with relatively small changes in the composition, pressure and/or temperature of the injected compositions.

"Geological formations", "formations", "subterranean geological formations" and "reservoir" within the context of the present invention shall be understood as relating to underground formations, storage reservoirs, geological reservoirs or formations consisting of a certain number of rock strata which may be onshore or offshore.

The term "CO₂ containing composition" should be understood to mean a composition which comprises CO₂ and optionally other components, i.e. it may refer to pure CO₂. Similarly, a composition comprising CO₂ may refer to pure CO₂, CO₂ with impurities or CO₂ with additional components such as hydrocarbons.

## Claims

1. A method of Enhanced Oil Recovery from paleo or residual oil zones in a subterranean geological formation, the method comprising:
a first injecting step of injecting a first composition comprising CO₂, the first composition being injected at its supercritical state, into the subterranean geological formation;
a second injecting step of injecting a second composition comprising CO₂ and a hydrocarbon, the second composition being injected at its supercritical state, into the subterranean geological formation, wherein the first composition and the second composition are different and wherein the different injected compositions have different viscosities and densities; and
extracting oil from the subterranean geological formation;
wherein the method comprises cycling alternately between the first injecting step and the second injecting step.

2. A method as claimed in claim 1, wherein the hydrocarbon in the second composition comprises an intermediate hydrocarbon, having a molecular weight of 72-142 g/mol, or heavy hydrocarbon, having a molecular weight greater than 142 g/mol.

3. A method as claimed in claim 1, wherein the hydrocarbon in the second composition comprises a light hydrocarbon, having a molecular weight less than 72 g/mol.

4. A method as claimed in any preceding claim, wherein the first composition consists of CO₂ with unavoidable impurities.

5. A method as claimed in any preceding claim, wherein the method comprises extracting one or more of at least some of the injected CO₂ and hydrocarbons.

6. A method as claimed in any preceding claim, wherein the first injection step and the second injection step each occur for a period of time of between one month and one year.

7. A method as claimed in any preceding claim, wherein the hydrocarbon which is in the second composition is selected to make the second composition miscible with residual oil in the subterranean geological formation.

8. A method as claimed in claim 7, wherein the proportion of hydrocarbon is selected to make the second composition miscible with residual oil in the subterranean geological formation.

## Patentansprüche

1. Verfahren für verstärkte Ölrückgewinnung aus Paleo- oder Rückstandsölzonen in einer unterirdischen geologischen Formation, wobei das Verfahren umfasst:
einen ersten Injizierschritt des Injizierens einer ersten Zusammensetzung, die CO₂ umfasst, wobei die erste Zusammensetzung in ihrem überkritischen Zustand in die unterirdische geologische Formation injiziert wird;
einen zweiten Injizierschritt des Injizierens einer zweiten Zusammensetzung, die CO₂ und einen Kohlenwasserstoff umfasst, wobei die zweite Zusammensetzung in ihrem überkritischen Zustand in die unterirdische geologische Formation injiziert wird, wobei die erste Zusammensetzung und die zweite Zusammensetzung verschieden sind und wobei die verschiedenen injizierten Zusammensetzungen verschiedene Viskositäten und Dichten aufweisen; und
Extrahieren von Öl aus der unterirdischen geologischen Formation;
wobei das Verfahren alternierendes Wechseln zwischen dem ersten Injizierschritt und dem zweiten Injizierschritt umfasst.

2. Verfahren nach Anspruch 1, wobei der Kohlenwasserstoff in der zweiten Zusammensetzung einen mittleren Kohlenwasserstoff mit einem Molekulargewicht von 72-142 g/mol oder schweren Kohlenwasserstoff mit einem Molekulargewicht größer als 142 g/mol umfasst.

3. Verfahren nach Anspruch 1, wobei der Kohlenwasserstoff in der zweiten Zusammensetzung einen leichten Kohlenwasserstoff mit einem Molekulargewicht geringer als 72 g/mol umfasst.

4. Verfahren nach einem vorstehenden Anspruch, wobei die erste Zusammensetzung aus CO₂ mit unvermeidbaren Verunreinigungen besteht.

5. Verfahren nach einem vorstehenden Anspruch, wobei das Verfahren Extrahieren von einem oder mehreren von mindestens dem injizierten CO₂ und Kohlenwasserstoffen umfasst.

6. Verfahren nach einem vorstehenden Anspruch, wobei der erste Injektionsschritt und der zweite Injektionsschritt jeweils für einen Zeitraum zwischen einem Monat und einem Jahr stattfinden.

7. Verfahren nach einem vorstehenden Anspruch, wobei der Kohlenwasserstoff, der in der zweiten Zusammensetzung vorliegt, ausgewählt wird, um die zweite Zusammensetzung mit Rückstandsöl in der unterirdischen geologischen Formation mischbar zu machen.

8. Verfahren nach Anspruch 7, wobei der Anteil an Kohlenwasserstoff ausgewählt wird, um die zweite Zusammensetzung mit Rückstandsöl in der unterirdischen geologischen Formation mischbar zu machen.

## Revendications

1. Procédé de récupération assistée de pétrole à partir de zones pétrolifères anciennes ou de zones de pétrole résiduel dans une formation géologique souterraine, le procédé comprenant :
une première étape d'injection consistant à injecter une première composition comprenant du CO₂, la première composition étant injectée dans son état supercritique, dans la formation géologique souterraine ;
une seconde étape d'injection consistant à injecter une seconde composition comprenant du CO₂ et un hydrocarbure, la seconde composition étant injectée dans son état supercritique, dans la formation géologique souterraine, dans lequel la première composition et la seconde composition sont différentes et dans lequel les compositions différentes injectées présentent des viscosités et des densités différentes ; et
l'extraction de pétrole à partir de la formation géologique souterraine ;
dans lequel le procédé comprend un cycle alterné entre la première étape d'injection et la seconde étape d'injection.

2. Procédé selon la revendication 1, dans lequel l'hydrocarbure dans la seconde composition comprend un hydrocarbure intermédiaire, présentant un poids moléculaire de 72-142 g/mol, ou un hydrocarbure lourd, présentant un poids moléculaire supérieur à 142 g/mol.

3. Procédé selon la revendication 1, dans lequel l'hydrocarbure dans la seconde composition comprend un hydrocarbure léger, présentant un poids moléculaire inférieur à 72 g/mol.

4. Procédé selon une quelconque revendication précédente, dans lequel la première composition consiste en du CO₂ avec des impuretés inévitables.

5. Procédé selon une quelconque revendication précédente, dans lequel le procédé comprend l'extraction d'un ou de plusieurs d'au moins certains parmi le CO₂ et les hydrocarbures injectés.

6. Procédé selon une quelconque revendication précédente, dans lequel la première étape d'injection et la seconde étape d'injection se déroulent chacune pendant une période de temps entre un mois et un an.

7. Procédé selon une quelconque revendication précédente, dans lequel l'hydrocarbure qui est dans la seconde composition est sélectionné afin de rendre la seconde composition miscible au pétrole résiduel dans la formation géologique souterraine.

8. Procédé selon la revendication 7, dans lequel la proportion d'hydrocarbure est sélectionnée afin de rendre la seconde composition miscible au pétrole résiduel dans la formation géologique souterraine.
